# EUROPÄISCHE PATENTSCHRIFT

(11) **EP 2 046 491 B1**
(45) Veröffentlichungstag und Bekanntmachung des Hinweises auf die Patenterteilung: **12.05.2010**
(21) Anmeldenummer: 07787548.2
(22) Anmeldetag: 13.07.2007
(51) Int. Cl.: B01D 71/82, B01D 71/68, C08J 5/22, H01M 8/22, C08G 75/20, C08G 75/23

(54) **SULFONIERTE POLYARYLENVERBINDUNGEN, MEMBRANMATERIAL DARAUS, VERFAHREN ZU IHRER HERSTELLUNG UND VERWENDUNG**
SULFONATED POLYARYLENE COMPOUNDS, MEMBRANE MATERIAL MADE THEREFROM, METHOD FOR THE PRODUCTION THEREOF, AND USE
COMPOSÉS DE POLYARYLÈNE SULFONÉS, MATÉRIAU POUR MEMBRANE OBTENU À PARTIR DE CES DERNIERS, PROCÉDÉ DE PRODUCTION ET D'UTILISATION DESDITS COMPOSÉS

(30) Priorität: 28.07.2006 DE 102006036496
(43) Veröffentlichungstag der Anmeldung: 15.04.2009
(73) Patentinhaber: Leibniz-Institut für Polymerforschung Dresden e.V., 01069 Dresden (DE)
(72) Erfinder: LEHMANN, Dieter, 01640 Coswig (DE); MEIER-HAACK, Jochen, 01259 Dresden (DE); VOGEL, Claus, 01069 Dresden (DE); BUTWILOWSKI, Wladimir, 01445 Radebeul (DE)
(74) Vertreter: Rauschenbach, Marion
(86) Internationale Anmeldenummer: PCT/EP2007/057280
(87) Internationale Veröffentlichungsnummer: WO 2008/012222

(56) Entgegenhaltungen:
- EP-A- 0 574 791
- EP-A- 1 274 147
- WO-A-03/030289
- DE-A1- 19 909 841
- FR-A- 2 214 675
- GB-A- 1 258 851
- US-A- 5 071 448
- DATABASE WPI Week 200517 Derwent Publications Ltd., London, GB; AN 2005-152753 XP002461844 & CN 1 539 804 A (GUANGZHOU CHEM INST CHINESE ACAD) 27. Oktober 2004 (2004-10-27)
- SAVADOGO O: "EMERGING MEMBRANES FOR ELECTROCHEMICAL SYSTEMS: (I) SOLID POLYMER ELECTROLYTE MEMBRANES FOR FUEL CELL SYSTEMS" JOURNAL OF NEW MATERIALS FOR ELECTROCHEMICAL SYSTEMS, ECOLE POLYTECHNIQUE DE MONTREAL, MONTREAL, CA, Bd. 1, 1998, Seiten 47-66, XP009014846 ISSN: 1480-2422

## Beschreibung

Die Erfindung bezieht sich auf das Gebiet der Polymerchemie und betrifft sulfonierte Polyarylenverbindungen, wie sie beispielsweise in lonentauschermembranen in Brennstoffzellen oder anderen elektrochemischen Prozessen oder als Low-Foulingmembranen für die Nano-, Ultra- oder Mikrofiltration oder Umkehrosmose zum Einsatz kommen können, sowie ein Verfahren zu ihrer Herstellung und ihrer Verwendung.

Unter den bekannten Brennstoffzellentypen zeichnet sich die saure Polymerelektrolytbrennstoffzelle (PEM) durch eine hohe Leistungsdichte und einem günstigen Verhältnis von Leistung zu Gewicht aus. Membranen aus Poly(perfluoralkylsulfonsäuren) wie z. B. Nafion^{®} (DuPont) gelten z. Zt. auf Grund ihrer hohen chemischen Beständigkeit und hohen Leitfähigkeit als Standardmembranen. Nachteile dieser Membranen sind die Limitierung der Betriebstemperatur auf max. 80 - 90°C sowie der derzeit noch sehr hohe Preis. Eine höhere Betriebstemperatur ist jedoch erwünscht, da die Elektrodenkinetik günstig beeinflusst wird, Katalysatorgifte wie Kohlenmonoxid schneller desorbieren und die Kühlung einen geringeren Aufwand erfordert (C. Wieser, Fuel Cells 4, 245 (2004)). Ferner weisen die Poly(perfluoralkylsulfonsäuren) eine hohe Methanoldurchlässigkeit, was sie für den Einsatz in DMFC (Direkt Methanol Brennstoffzelle) ausschließt.
Als alternative Materialien für Brennstoffzellenmembranen werden sulfonierte Polyarylverbindungen intensiv untersucht. Favorisiert werden dabei insbesondere Poly(etherketone) (PEK, PEEK) und Poly(ethersulfone) (PES, PEES). Andere sulfonierte Hochleistungspolymere wie Polyimide wurden ebenfalls untersucht (N. Cornet et al., J. New Mater. Electrochem. Syst. 3, 33 - 42 (2000)). Diese sind jedoch bzgl. ihrer chemischen Stabilität nicht für den Einsatz als Brennstoffzellenmembranen geeignet (G. Meier et al., Polymer 47, 5003 - 5011 (2006)).
Die Sulfonierung erfolgt in den meisten Fällen an der Hauptkette am elektronenreichen Aromaten. Es ist jedoch allgemein bekannt, dass die Sulfonierung von Aromaten reversibel ist und durch Elektronendonorsubstituenten (z. B. Ethergruppen), hohe Temperaturen und saure Medien begünstigt wird (Organikum, 22. Auflage, Wiley-VCH Verlag GmbH Weinheim 2004, ISBN 3-527-31148-3). Ferner wurde berichtet, das die Sulfonierung der Polymerhauptkette zu einer Destabilisierung und damit zu einer Minderung der Molmasse und Minderung der mechanischen Eigenschaften führt (J. F. Blanco et al., J. Appl. Polym. Sci. 84, 2461 - 2473 (2002)).
Andererseits wurde gefunden, dass die Sulfonsäuregruppe in Poly(styrolsulfonsäure) bis ca. 200°C in Wasser hydrolysestabil ist (C. Vogel et al., Fuel Cells, 4, 320 - 327 (2004)). Poly(styrolsulfonsäure) kann jedoch auf Grund ihrer Oxidationsempfindlichkeit nicht in Brennstoffzellen genutzt werden (J. Yu et al., Phys. Chem. Chem. Phys. 5, 611 - 615 (2003)).
Polymere Brennstoffzellenmembranen mit sulfonierter aromatischer Seitenkette wurden ebenfalls beschrieben. Ziel dabei ist es die Mikrophasenseparation zwischen hydrophober Hauptkette und hydrophilen Elementen (Sulfonsäuregruppen) zu unterstützen. Es wird erwartet, dass die Quellung der Membranen in Wasser durch die eingeführten Spacer zwischen Polymerhauptkette und Sulfonsäuregruppe minimiert wird.
Lafitte et al. haben ein Polysulfon auf Bisphenol-A-Basis mit dem cyclischen Anhydrid der 2-Sulfobenzoesäure und anderen Elektrophilen in einer Zweistufen-und Mehrstufenreaktion umgesetzt (B. Lafitte et al., Macromol. Rapid Commun., 23, 896 - 900 (2002) und ibid 26, 1464 - 1468 (2005)). In der ersten Stufe erfolgt eine Aktivierung des Polymeren durch Umsetzung mit Butyllithium. Die zweite Stufe beinhaltet die Umsetzung des aktivierten Polymers mit 2-Sulfobenzoesäureanhydrid oder Fluorbenzoylchlorid. Letzteres wird in einem weiteren Schritt in einer nukleophilen Reaktion mit einer Hydroxyarylsulfonsäuren umgesetzt. Nachteil dieses Verfahrens ist die Empfindlichkeit der Reaktanden (BuLi, aktiviertes Polymer) auf Verunreinigungen (z. B. Wasser, Sauerstoff, Kohlendioxid) und die damit verbundenen Nebenreaktionen und die schlechte Kontrolle des Sulfonierungsgrades sowie der relativ hohe Preis für Butyllithium.
Chen et al. haben Polyimid-sulfone mit Sulfobenzoylseitengruppen beschrieben (S. Chen et al., Polymer 47, 2660 - 2669 (2006)). In dieser Arbeit wurde Dichlordiphenylsulfon in einer Mehrstufenreaktion zunächst carboxyliert (BuLi + CO₂), dann in das Säurechlorid überführt und in einer Friedel-Crafts-Acylierung mit Benzol zum Benzoylderivat umgesetzt. Die Sulfonierung dieses Monomers erfolgte mit Oleum (30% SO₃) bei 75°C. Über weitere Umsetzungen mit 1.) Aminophenol und 2.) Naphthalintetracarbonsäureanhydrid werden die sulfonierten Polymere erhalten. Dieses Verfahren ist sehr aufwendig und kostenintensiv, zumal bei der Herstellung des sulfonierten Monomeren nur eine Gesamtausbeute von 50% erzielt wurde. Ferner ist bekannt, dass Polyimide unter Brennstoffzellenbedingungen nicht beständig sind (G. Meier et al., Polymer 47, 5003 - 5011 (2006)).
Ghassemi et al. haben ein Blockcopolymer, basierend auf Polyphenylensulfon und Poly(4'-phenyl-2,5-benzophenon) beschrieben, dass ausschließlich in der Phenylbenzophenon-Seitenkette sulfoniert ist (H. Ghassemi, et al., Polymer 45, 5855 - 5862 (2004)). Angaben über die Hydrolysestabilität dieser Produkte wurden nicht gemacht.
Gieselmann et al. haben Seitengruppen sulfonierte Polybenzimidazole vorgestellt (M. Gieselman et al., Macromolecules, 25, 4832 - 4834 (1992)) um die Löslichkeit dieser Polymere zu verbessern. Die Modifizierung erfolgte durch Alkylierung des NH-Stickstoff des Imidazolringes in einer Zweistufenreaktion 1.) Deprotonierung des NH-Stickstoffs mit einer starken Base (LiH) und anschließende Umsetzung mit 1,3-Propansulton oder Benzylbromidsulfonsäure.

Aufgabe der vorliegenden Erfindung ist es, hydrolyse- und thermostabile, sulfonierte Polyarylenverbindungen mit definiertem Sulfonierungsgrad und -ort anzugeben, aus denen Membranmaterialien mit einer verbesserten Hydrolysebeständigkeit hergestellt werden können, und ein einfaches und preiswerteres Herstellungsverfahren dafür anzugeben.

Die Aufgabe wird durch die in den Ansprüchen angegebene Erfindung gelöst. Vorteilhafte Ausgestaltungen sind Gegenstand der Unteransprüche.

Die erfindungsgemäßen sulfonierten Polyarylenverbindungen sind nach mindestens einer der allgemeinen Formeln (I) - (IV) aufgebaut, 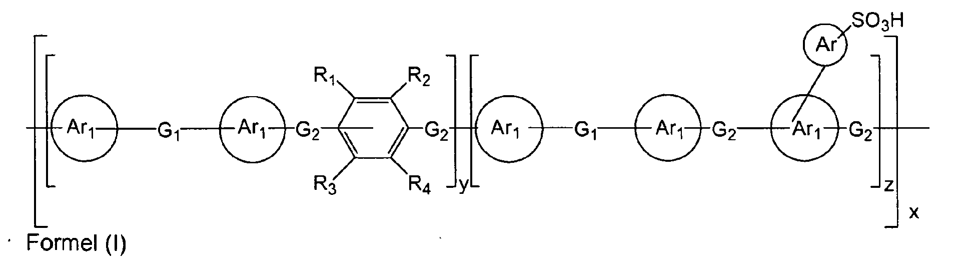 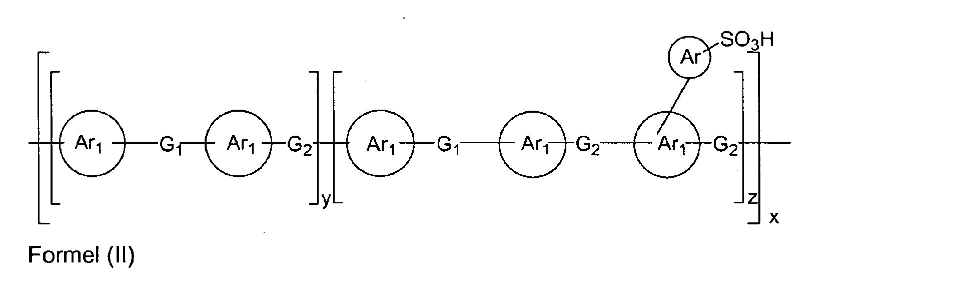 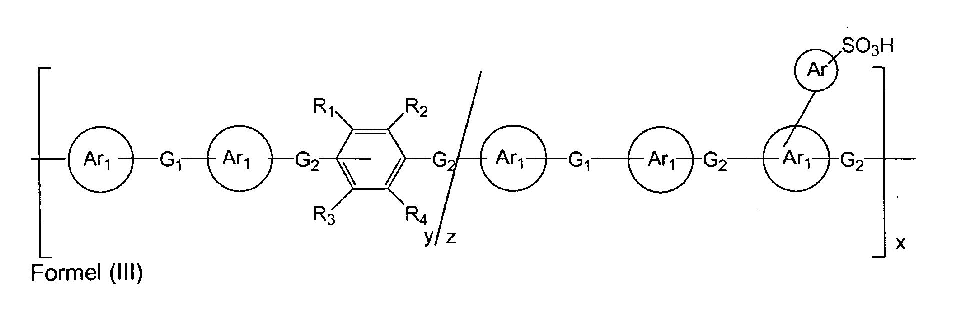 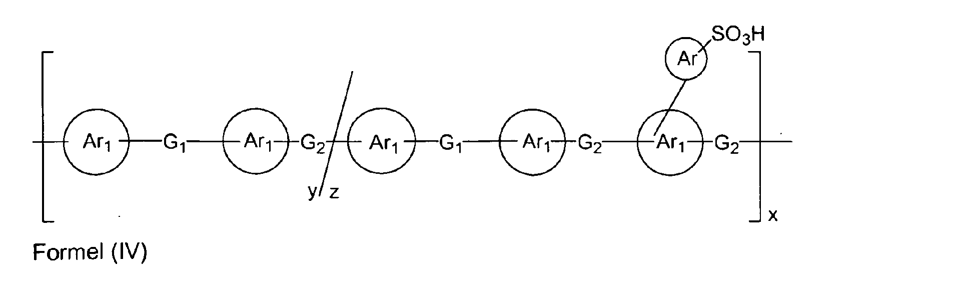 und wobei:
Ar₁ ein- und/oder mehrkernige Aromaten sind und
G₁ eine Gruppe mit Elektronenakzeptoreigenschaften ist und
G₂ eine Ether- und/oder Sulfid- und/oder Keto- und/oder Sulfon- und/oder Phenylphosphinoxyd- und/oder Sulfoxidgruppe ist und
R₁, R₂, R₃, R₄ Substituenten sind oder R₁ bis R₄ gleich Wasserstoff ist oder mindestens ein Rest R₁ bis R₄ ungleich Wasserstoff und dieser ein Substituent ist und
y ≥ 0 und z ≥ 1 und x ≥ 5 und
Ar = ein oder mehrere ein- und/oder mehrkernige Aromaten und/oder ein oder mehrere Biphenyle sind,
   und Sulfonsäuregruppen mindestens an die aromatischen Gruppen "Ar", die die Seitenketten bilden, gebunden sind.

Vorteilhafterweise sind
Ar₁ eine Phenyleinheit und/oder eine Naphthyleinheit,
   und
G₁ eine Sulfongruppe und/oder eine Ketogruppe und/oder eine Phenylphosphingruppe.
   Ebenfalls vorteilhafterweise ist y ≥ 2 und noch vorteilhafterweise y ≥ 4.
   Auch vorteilhafterweise ist z ≥ 2 und noch vorteilhafterweise z ≥ 4.
   Weiterhin vorteilhafterweise ist x ≥ 10 und noch vorteilhafterweise x ≥ 20.
   Vorteilhaft ist es, wenn Ar mindestens ein Phenylrest und/oder mindestens ein Naphthylrest ist.
   Vorteilhaft ist es auch, wenn die Sulfonsäuregruppen ausschließlich an die aromatischen Gruppen "Ar" gebunden sind.
   Weiterhin vorteilhaft ist es, wenn die Polyarylenverbindungen überwiegend eine Blockstruktur aufweisen. Ferner ist auch vorteilhaft, wenn die Polyarylenverbindungen eine statistische oder eine reine Blockstruktur aufweisen.
   Auch vorteilhaft ist es, wenn die aromatischen Gruppen "Ar" als Seitenkette direkt kovalent an einen ein- oder mehrkernigen Aromaten der Hauptkette gebunden sind.
   Weiter erfindungsgemäß besteht ein Membranmaterial aus mindestens einer sulfonierten Polyarylenverbindung.
   Dabei ist vorteilhafterweise mindestens ein weiteres Polymer aus aromatischen Monomereinheiten, die über Sulfid- und/oder Sulfoxid- und/oder Sulfon- und/oder Ether- und/oder Keto- und/oder Methylen- und/oder Isopropyl- und/oder Hexafluorisopropyl- und/oder Phenylphosphinoxyd- und/oder Imidazol- und/oder Oxazol- und/oder Thiazol- und/oder Chinoxalin- und/oder Chinoxazolgruppen verknüpft sind, enthalten.
   Und weiterhin vorteilhaft sind die aromatischen Monomereinheiten substituiert.
   Bei dem erfindungsgemäßen Verfahren zur Herstellung von sulfonierten Polyarylenverbindungen werden mindestens einfach arylsubstituierte 1,4-Dihydroxybenzole/Hydrochinone und/oder 1,4-Dihydroxynaphthaline als Aryl-Monomere mit einer aromatischen Gruppe "Ar" gemeinsam mit Dihalogenaromaten zu Arylverbindungen polymerisiert und nachfolgend Sulfonsäuregruppen mindestens an die aromatischen Gruppen "Ar" gebunden.
   Vorteilhafterweise werden als Aryl-Monomere Phenylhydrochinon und/oder Naphthylhydrochinon und/oder Anthracenylhydrochinon und/oder 2,5-Diphenylhydrochinon und/oder Biphenylylhydrochinon und/oder 2,5-Bis-Biphenylylhydrochinon und/oder Tetraphenylhydrochinon und/oder 1,4-Dihydroxy-2-phenylnaphthalin und/oder 1,4-Dihydroxy-2-naphthylnaphthalin eingesetzt.
   Ebenfalls vorteilhafterweise werden die Aryl-Monomere zu Arylpolymeren mit aromatischen Gruppen "Ar" als Seitenkette in Lösung polymerisiert.
   Auch vorteilhafterweise werden die Aryl-Monomere zu Arylpolymeren mit aromatischen Gruppen "Ar" als Seitenkette in Schmelze polymerisiert.
   Vorteilhaft ist es, wenn weitere Aryl-Monomere ohne eine aromatische Gruppe "Ar" als Seitenkette in die Polymerkette der Polyarylenverbindungen eingebunden werden.
   Auch vorteilhaft ist es, wenn als weitere Aryl-Monomere ohne eine aromatische Gruppe "Ar" als Seitenkette Bisphenole oder weitere 1,4-Dihydroxybenzole/Hydrochinone und/oder 1,4-Dihydroxynaphthaline als Aryl-Monomere ohne eine aromatischen Gruppe "Ar" eingesetzt werden, die vorteilhafterweise als 4,4'-Dihydroxybenzophenon und/oder 3,4'-Dihydroxybenzophenon und/oder 2,4'-Dihydroxybenzophenon und/oder 2,2'-Dihydroxybenzophenon und/oder 4,4'-Dihydroxydiphenylsulfon und/oder 3,4'-Dihydroxydiphenylsulfon und/oder 2,4'-Dihydroxydiphenylsulfon und/oder 2,2'-Dihydroxydiphenylsulfon und/oder 2,2-(Bis-4-hydroxyphenyl)hexafluorpropan eingesetzt werden.
   Weiterhin vorteilhaft ist es, wenn als Dihalogenaromaten Difluordiphenylsulfon und/oder Difluorbenzophenon und/oder Bis-(4-Fluorphenyl)phosphinoxyd und/oder Bis-(4-Fluorbenzoyl)benzol oder Dichlordiphenylsulfon und/oder Dichlorbenzophenon eingesetzt werden.
   Ebenfalls vorteilhaft ist es, wenn die Arylpolymere mit aromatischen Gruppen "Ar" als Seitenkette durch Zugabe der Polymere zu einem Sulfonierungsmittel sulfoniert werden.

Von Vorteil ist es, wenn die Arylpolymere mit aromatischen Gruppen "Ar" als Seitenkette in einem inerten Lösungsmittel gelöst und mit einem Sulfonierungsmittel sulfoniert werden, wobei besonders vorteilhaft ist, wenn als Sulfonierungsmittel Schwefelsäure oder Oleum oder Chlorsulfonsäure oder Chlorsulfonsäuretrimethylsilylester oder Acetylsulfat oder ein SO₃-Triethylphosphit-Addukt eingesetzt wird. Von besonderem Vorteil ist weiterhin, wenn das Sulfonierungsmittel Schwefelsäure ist und die Sulfonierung bei Raumtemperatur und während einer Reaktionszeit von 1 bis 8 Stunden, vorteilhafterweise während einer Zeit von 2 bis 4 Stunden durchgeführt wird.

Weiterhin von Vorteil ist es, wenn das Sulfonierungsmittel in einem inerten Lösungsmittel gelöst eingesetzt wird, wobei vorteilhafterweise als Lösungsmittel Chloroform oder Dichlormethan oder Dichlorethan oder Tetrachlorethan eingesetzt wird.

Noch vorteilhafter ist es, wenn als Sulfonierungsmittel Chlorsulfonsäuretrimethylsilylester eingesetzt wird.

Auch vorteilhaft ist es, wenn die Sulfonierungsreaktion bei einer Temperatur von 25°C bis 100°C, vorteilhafterweise bei einer Temperatur von 25°C bis 50°C durchgeführt wird.

Es ist auch von Vorteil, wenn durch Nachbehandlung wenig stabile oder instabile, d. h. in einer Rückreaktion zur Sulfonierung abspaltbare/hydrolysierbare Sulfonsäuregruppen abgespalten werden.

Erfindungsgemäß wird aus den sulfonierten Polyarylenverbindungen eine Membran hergestellt.

Auch erfindungsgemäß werden die sulfonierten Polyarylenverbindungen als Membranmaterial verwendet.

Vorteilhafterweise werden sie als Membranmaterial für lonenaustauschermembranen für Brennstoffzellen oder andere elektrochemische Prozesse oder als Nanofiltrationsmembran oder als Ultrafiltrationsmembran oder als Mikrofiltrationsmembran oder als Umkehrosmosemembran verwendet.

Mit der erfindungsgemäßen Lösung können auf einfache und preiswerte Art und Weise Ausgangsstoffe für Membranmaterialien hergestellt werden, die deutliche Verbesserungen in den Eigenschaften zeigen.
Als Vorteil der erfindungsgemäßen Lösung kann genannt werden, dass die Glasübergangstemperatur der erfindungsgemäßen sulfonierten Polyarylenverbindungen auf Basis von Hydrochinon und/oder Bisphenol-A und/oder Dihydroxybiphenyl im Vergleich zu PEEK und PES deutlich höher ist.
Durch die chemische Struktur der erfindungsgemäßen Polymermaterialien kann der Ort und der Grad der Sulfonierung gezielt eingestellt werden. Die Hydrolysestabilität ist gegenüber dem Stand der Technik deutlich erhöht.

Das erfindungsgemäße Herstellungsverfahren ist sehr kostengünstig, da kommerzielle Monomere eingesetzt werden können. Alternativ zu den in den Beispielen angegebenen Verbindungen können auch freie Bisphenole und Dichloraromaten eingesetzt werden, was die erfindungsgemäßen Polymere ebenfalls noch deutlich billiger macht. Allerdings muss dann eine Reaktionstemperatur von 190 - 200°C gewählt werden.

Membranen aus den erfindungsgemäßen sulfonierten Polyarylenverbindungen weisen gegenüber dem Stand der Technik, insbesondere Nafion, eine wesentlich geringere Methanoldurchlässigkeit auf, ohne dass sich andere Eigenschaften verschlechtern, was diese Membranen insbesondere für den Einsatz in der DMFC prädestiniert.

Nachfolgend wird die Erfindung an mehreren Ausführungsbeispielen näher erläutert.

Dabei bedeuten:
DMAc = N,N-Dimethylacetamid
GPC = Gelpermeationschromatographie
M_{w} = Molmasse in (g/mol) (Gewichtsmittel)
Mₙ = Molmasse (g/mol) (Zahlenmittel)
ηᵢₙₕ. = inhärente Viskosität (dl/g)
IEC = lonentauscherkapazität in mmol/g(Polymer); Maß für den Sulfonierungsgrad
T_{g}: Glasübergangstemperatur (°C)
c = Konzentration in g/l
PVP = Polyvinylpyrrolidon

Von allen in den Beispielen angegebenen Proben wurden NMR-Spektren aufgenommen, um den Sulfonierungsgrad und den Sulfonierungsort zu bestimmen. Stellvertretend sind die Spektren der Probe aus Beispiel 4 angeführt.

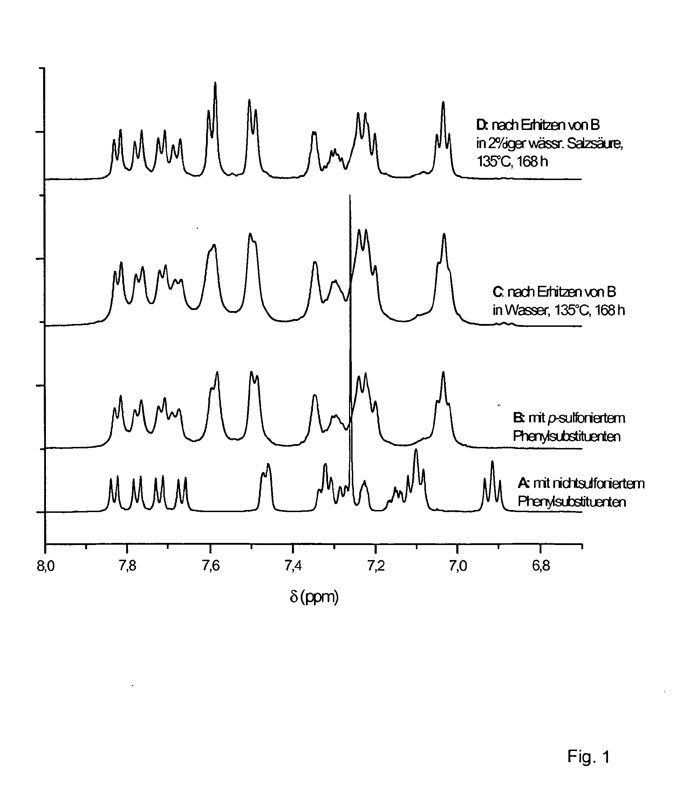

Dabei zeigt
Fig. 1:1H-NMR-Spektren (Aromatenregion) zu Beispiel 4, Poly(oxy-1,4-(2-phenyl)phenylenoxy-1,4-phenylen-carbonyl-1,4-phenylen), einem Beispiel mit einer Struktur nach Formel I mit y = 0, und
   Ar₁ = *p*-Phenylen-Gruppe (mit 1,4-ständigen Gruppen G₁ und G₂)
   Ar = Phenylgruppe, 2-ständig an 1,4-disubst. Phenylgruppe Ar₁ der Hauptkette
   - ohne Sulfonsäuregruppe (Substanz A) - Spektrum A; mit *para*-ständiger Sulfonsäuregruppe (Substanz B) - Spektren B, C, D
      G₁ = CO (Ketogruppe)
      G₂ = O (Etherbrücke)

### Beispiel 1

26,18g (120 mmol) 4,4'-Difluordiphenylsulfon, 17,76 g (45 mmol) 4,4'-Bis-trimethylsiloxy-diphenylsulfon und 24,766 g (75 mmol) 2,5-Bis-trimethylsiloxybiphenyl (Phenylhydrochinon-bis-trimethylsilylether) werden unter Feuchtigkeitsausschluss in einen 500 ml 3-Halsrundkolben eingewogen und mit 250 ml wasserfreiem N-Methyl-2-pyrrolidon versetzt. Unter einem leichten Argonstrom werden die Monomere gelöst und die Reaktionslösung mit 24,88g (180 mmol) wasserfreiem Kaliumcarbonat versetzt. Der Reaktionsansatz wird auf 175°C erhitzt und 24 h bei dieser Temperatur gehalten. Nach dem Abkühlen auf Raumtemperatur wird die Lösung filtriert, um ungelöste Bestandteile (Salze) abzutrennen, und dann das Polymer in 2-Propanol gefällt. Das Polymer wird in Chloroform gelöst, und evtl. ungelöste Bestandteile durch Filtration abgetrennt. Das Polymer wird in 2-Propanol gefällt, sorgfältig zunächst mit 2-Propanol und anschließend mit Methanol gewaschen und im Vakuum bei 80°C bis zur Gewichtskonstanz getrocknet.
Die Sulfonierung erfolgt durch Lösen des Polymeren in konzentrierter Schwefelsäure (96 - 98%) und Rühren für 4 Stunden bei 25°C. Das Sulfonierungsprodukt wird durch Eingießen der Schwefelsäurelösung in kaltes Wasser ausgefällt. Nach gründlichem Waschen mit kaltem Wasser (bis pH 7 des Waschwassers) wird das Produkt im Vakuum bei 80°C bis zur Gewichtskonstanz getrocknet.
Der Sulfonierungsgrad wurde titrimetrisch bestimmt.

Eigenschaften:
ηᵢₙₕ: 0,39 dl/g (gemessen in DMAc (25°C); c = 2 g/l)
GPC: M_{w} = 58000; Mₙ = 24000; M_{w}/Mₙ = 2,4
   (DMAc + 2% Wasser 3 g/l LiCl; PVP Standards für Kalibrierung)
IECₜₕₑₒ: 1,33 mmol/g IECₜᵢₜᵣᵢₑᵣₜ: 1,35 mmol/g
T_{g}: 229 °C
Wasseraufnahme: 22% (Nafion 117: 25%)
Methanoldiffusion: 1,8x10⁻⁶ cm²/sec (Nafion 117: 8,9x10⁻⁶ cm²/sec)

### Beispiel 2

30,51 g (120 mmol) 4,4'-Difluordiphenylsulfon, 11,84 g (30 mmol) 4,4'-Bis-trimethylsiloxy-diphenylsulfon und 29,71 g (90 mmol) 2,5-Bis-trimethylsiloxy-biphenyl (Phenylhydrochinon-bis-trimethylsilylether) werden unter Feuchtigkeitsausschluss in einen Glasreaktor eingewogen. Unter einem leichten Argonstrom und unter Rühren werden die Monomere bei einer Temperatur von 130°C aufgeschmolzen. Nach Zugabe von 100 mg CsF wird die Temperatur über einen Zeitraum von 10 Stunden schrittweise auf 300°C angehoben. Bei der finalen Temperatur wird die Reaktion für eine Stunde unter Vakuum ohne Rühren fortgeführt. Das Polymer wird nach dem Abkühlen auf Raumtemperatur in 200 ml Chloroform gelöst und die Lösung anschließend unter heftigem Rühren mit 18,5 ml (120 mmol) Chlorsulfonsäuretrimethylsilylester, gelöst in 50 ml Chloroform, versetzt und 24 h bei 50°C gerührt. Das Produkt wird in Wasser/2-Propanol 1:9 gefällt, mit Wasser gewaschen und im Vakuum bei 80°C bis zur Gewichtskonstanz getrocknet.

Eigenschaften:
ηᵢₙₕ: 0,41 dl/g (DMAc 25°C; c = 2 g/l)
GPC: M_{w} = 71000; Mₙ = 30000; M_{w}/Mₙ = 2,4
   (DMAc + 2% Wasser 3 g/l LiCl; PVP Standards für Kalibrierung)
IECₜₕₑₒ: 1,58 mmol/g IECₜᵢₜᵣᵢₑᵣₜ: 1,54 mmol/g
T_{g}: 225°C
Wasseraufnahme: 26% bei 25°C (Nafion 117: 25%)
Methanoldiffusion (75°C): 3,8x10⁻⁶ cm²/sec (Nafion 117: 8,9x10⁻⁶ cm²/sec)

### Beispiel 3

26,18 g (120 mmol) 4,4'-Difluorbenzophenon, 21,52 g (60 mmol) Bis-4,4'-Trimethyl-siloxybenzophenon und 19,83 g (60 mmol) 2,5-Bis-trimethylsiloxybiphenyl (Phenylhydrochinon-bis-trimethylsilylether) werden unter Feuchtigkeitsausschluss in einen 500 ml 3-Halsrundkolben eingewogen und mit 250 ml wasserfreiem N-Methyl-2-pyrrolidon versetzt. Unter einem leichten Argonstrom werden die Monomere gelöst und die Reaktionslösung mit 24,88g (180 mmol) wasserfreiem Kaliumcarbonat versetzt. Der Reaktionsansatz wird auf 175°C erhitzt und 24 h bei dieser Temperatur gehalten. Nach dem Abkühlen auf Raumtemperatur wird die Lösung filtriert, um ungelöste Bestandteile (Salze) abzutrennen, und dann das Polymer in 2-Propanol gefällt. Das Polymer wird in Chloroform gelöst, und evtl. ungelöste Bestandteile durch Filtration abgetrennt. Das Polymer wird in 2-Propanol gefällt, sorgfältig zunächst mit 2-Propanol und anschließend mit Methanol gewaschen und im Vakuum bei 80°C bis zur Gewichtskonstanz getrocknet.

Die Sulfonierung erfolgt durch Lösen des Polymeren in konzentrierter Schwefelsäure (96 - 98%) und Rühren für 4 Stunden bei 25°C. Das Sulfonierungsprodukt wird durch Eingießen der Schwefelsäurelösung in kaltes Wasser ausgefällt. Nach gründlichem Waschen mit kaltem Wasser (bis pH 7 des Waschwassers) wird das Produkt im Vakuum bei 80°C bis zur Gewichtskonstanz getrocknet.

Eigenschaften:
ηᵢₙₕ: 0,63 dl/g (DMAc 25°C; c = 2 g/l)
GPC: M_{w} = 62000; Mₙ = 16000; M_{w}/Mₙ = 3,88
   (DMAc + 2% Wasser 3 g/l LiCl; PVP Standards für Kalibrierung)
IECₜₕₑₒ: 1,17 mmol/g IECₜᵢₜᵣᵢₑᵣₜ: 1,13 mmol/g
T_{g}:135°C

### Beispiel 4

6,6115g (30,3 mmol) 4,4'-Difluorbenzophenon, 9,917g (30 mmol) 2,5-Bis-trimethylsiloxybiphenyl (Phenylhydrochinon-bis-trimethylsilylether) werden unter Feuchtigkeitsausschluss in einen 100 ml 3-Halsrundkolben eingewogen und mit 50 ml wasserfreiem N-Methyl-2-pyrrolidon versetzt. Unter einem leichten Argonstrom werden die Monomere gelöst und die Reaktionslösung mit 4,146g (30 mmol) wasserfreiem Kaliumcarbonat versetzt. Der Reaktionsansatz wird auf 175°C erhitzt und 24 h bei dieser Temperatur gehalten. Nach dem Abkühlen auf Raumtemperatur wird die Lösung filtriert, um ungelöste Bestandteile (Salze) abzutrennen, und dann das Polymer in 2-Propanol gefällt. Das Polymer wird in Chloroform gelöst, und evtl. ungelöste Bestandteile durch Filtration abgetrennt. Das Polymer wird in 2-Propanol gefällt, sorgfältig zunächst mit 2-Propanol und anschließend mit Methanol gewaschen und im Vakuum bei 80°C bis zur Gewichtskonstanz getrocknet.
Die Sulfonierung erfolgt durch Lösen des Polymeren in konzentrierter Schwefelsäure (96 - 98%) und Rühren für 4 Stunden bei 25°C. Das Sulfonierungsprodukt wird durch Eingießen der Schwefelsäurelösung in kaltes Wasser ausgefällt. Nach gründlichem Waschen mit kaltem Wasser (bis pH 7 des Waschwassers) wird das Produkt im Vakuum bei 80°C bis zur Gewichtskonstanz getrocknet.

Eigenschaften:
ηᵢₙₕ: 0,40 dl/g (DMAc 25°C; c = 2 g/l)
GPC: M_{w} = 120700; Mₙ = 32000; M_{w}/Mₙ = 3,77
   (DMAc + 2% Wasser 3 g/l LiCl; PVP Standards für Kalibrierung)
IECₜₕₑₒ: 2,24 mmol/g IEC_{(Sulfonierungsgrad)}: 2,2 mmol/g
T_{g}: 168°C

### Beispiel 5

Herstellung der Membranen
10 g des sulfonierten Polymers aus Beispiel 1, 2 oder 3 werden in 100 ml N-Methyl-2-pyrrolidon bei 25°C gelöst und über eine Glasfritte G4 filtriert. Durch Anlegen von Vakuum wird die Lösung entgast. Nachdem die Lösung blasenfrei ist, wird diese mit
Hilfe einer Rakel zu einem 700 µm dicken Film auf einer Glasplatte ausgestrichen. Das Lösungsmittel wird zunächst für 8 Stunden bei 80°C und Normaldruck, und anschließend für 8 Stunden bei einem Druck von 100 mbar und 80°C abgedampft. Zum vollständigen Trocknen wird der Film 24 Stunden im Ölpumpenvakuum bei 120°C thermisch behandelt. Die Membran wird durch Einlegen der erkalteten Glasplatte in Wasser abgelöst und für 24 Stunden in destilliertem Wasser unter mehrmaligem Wechsel des Wassers von löslichen Bestandteilen befreit. Zur Trocknung wird die Membran zwischen zwei Metallplatten gepresst und bei 80°C im Vakuum bis zur Gewichtskonstanz getrocknet. Die Filmdicke beträgt ca. 70 µm.

### Beispiel 6

Die Hydrolysestabilität des sulfonierten Materials wurde durch Behandeln der nach Beispiel 5 hergestellten Membranen in Wasser oder verdünnten wässrigen Mineralsäuren (2% HCl) bei 135°C über einen Zeitraum von 168 h getestet. Beim Vergleich der 1 H-NMR Spektren der Proben vor und nach der thermischen Behandlung zeigten sich keinerlei Unterschiede.

## Patentansprüche

1. Sulfonierte Polyarylenverbindungen nach mindestens einer der allgemeinen Formeln (I) - (IV) 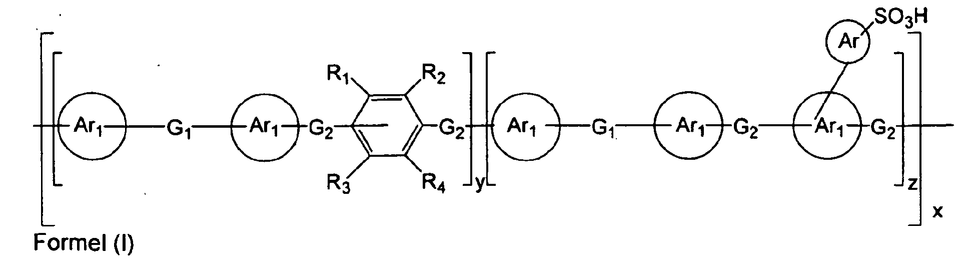 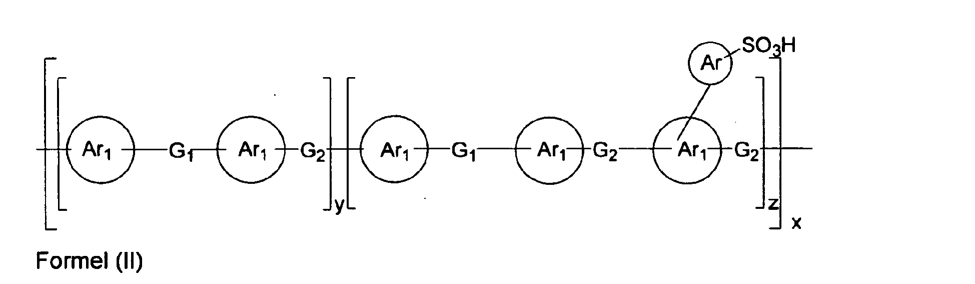 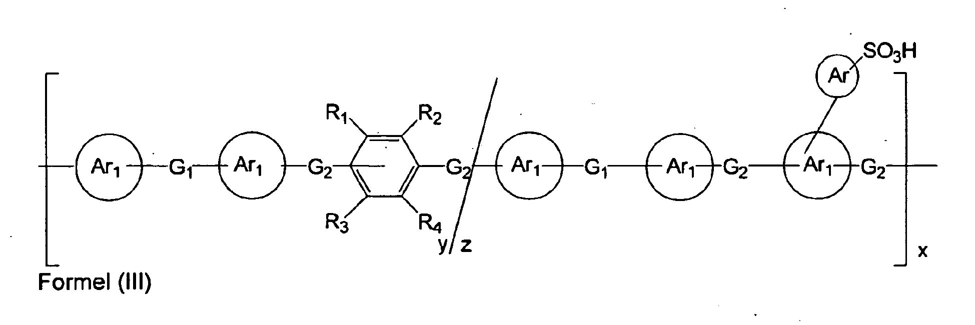 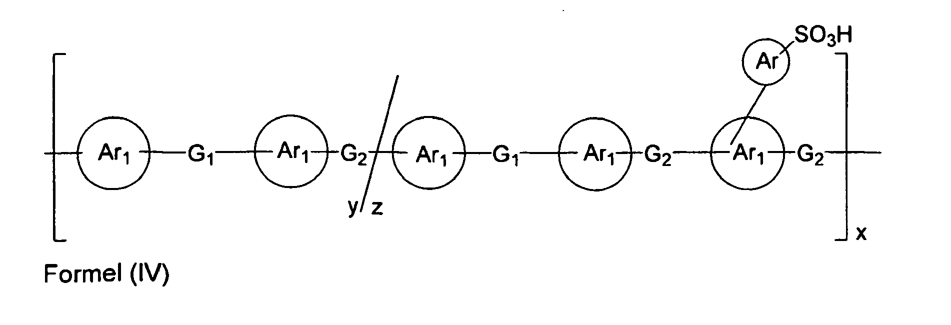 und wobei:
Ar₁ ein- und/oder mehrkernige Aromaten sind und
G₁ eine Gruppe mit Elektronenakzeptoreigenschaften ist und
G₂ eine Ether- und/oder Sulfid- und/oder Keto- und/oder Sulfon- und/oder Phenylphosphinoxyd- und/oder Sulfoxidgruppe ist und
R₁, R₂, R₃, R₄ Substituenten sind oder R₁ bis R₄ gleich Wasserstoff ist oder mindestens ein Rest R₁ bis R₄ ungleich Wasserstoff und dieser ein Substituent ist und
y ≥ 0 und z ≥ 1 und x ≥ 5 und
Ar = ein oder mehrere ein- und/oder mehrkernige Aromaten und/oder ein oder mehrere Biphenyle sind,
und Sulfonsäuregruppen mindestens an die aromatischen Gruppen "Ar", die die Seitenketten bilden, gebunden sind.

2. Sulfonierte Polyarylenverbindungen gemäß Anspruch 1, bei denen
Ar₁ eine Phenyleinheit und/oder eine Naphthyleinheit sind,
und
G₁ eine Sulfongruppe und/oder eine Ketogruppe und/oder eine Phenylphosphingruppe ist,
und/oder
y ≥ 2, vorteilhafterweise y ≥ 4 ist,
und/oder
z ≥ 2, vorteilhafterweise z ≥ 4 ist,
und/oder
x ≥ 10, vorteilhafterweise x ≥ 20 ist,
und/oder
Ar mindestens ein Phenylrest und/oder mindestens ein Naphthylrest ist.

3. Sulfonierte Polyarylenverbindungen gemäß Anspruch 1, bei denen die Sulfonsäuregruppen ausschließlich an die aromatischen Gruppen "Ar" gebunden sind.

4. Sulfonierte Polyarylenverbindungen gemäß Anspruch 1, bei denen die Polyarylenverbindungen überwiegend eine Blockstruktur oder eine statistische oder eine reine Blockstruktur aufweisen.

5. Sulfonierte Polyarylenverbindungen gemäß Anspruch 1, bei denen die aromatischen Gruppen "Ar" als Seitenkette direkt kovalent an einen ein- oder mehrkernigen Aromaten der Hauptkette gebunden sind.

6. Verfahren zur Herstellung von sulfonierten Polyarylenverbindungen nach Anspruch 1, bei dem mindestens einfach arylsubstituierte 1,4-Dihydroxybenzole/Hydrochinone und/oder 1,4-Dihydroxynaphthaline als Aryl-Monomere mit einer aromatischen Gruppe "Ar" gemeinsam mit Dihalogenaromaten zu Arylenverbindungen polymerisiert und nachfolgend Sulfonsäuregruppen mindestens an die aromatischen Gruppen "Ar" gebunden werden.

7. Verfahren nach Anspruch 6, bei dem als Aryl-Monomere Phenylhydrochinon und/oder Naphthylhydrochinon und/oder Anthracenylhydrochinon und/oder 2,5-Diphenylhydrochinon und/oder Biphenylylhydrochinon und/oder 2,5-Bis-Biphenylylhydrochinon und/oder Tetraphenylhydrochinon und/oder 1,4-Dihydroxy-2-phenylnaphthalin und/oder 1,4-Dihydroxy-2-naphthylnaphthalin eingesetzt werden.

8. Verfahren nach Anspruch 6, bei dem die Aryl-Monomere zu Arylenpolymeren mit aromatischen Gruppen "Ar" als Seitenkette in Lösung oder in Schmelze polymerisiert werden.

9. Verfahren nach Anspruch 6, bei dem weitere Aryl-Monomere ohne eine aromatische Gruppe "Ar" als Seitenkette, vorteilhafterweise Bisphenole, wie 4,4'-Dihydroxybenzophenon und/oder 3,4'-Dihydroxybenzophenon und/oder 2,4'-Dihydroxybenzophenon und/oder 2,2'-Dihydroxybenzophenon und/oder 4,4'-Dihydroxydiphenylsulfon und/oder 3,4'-Dihydroxydiphenylsulfon und/oder 2,4'-Dihydroxydiphenylsulfon und/oder 2,2'-Dihydroxydiphenylsulfon und/oder 2,2-(Bis-4-hydroxyphenyl)hexafluorpropan, oder weitere 1,4-Dihydroxybenzole/Hydrochinone und/oder 1,4-Dihydroxynaphthaline, in die Polymerkette der Polyarylenverbindungen eingebunden werden.

10. Verfahren nach Anspruch 6, bei dem als Dihalogenaromaten Difluordiphenylsulfon und/oder Difluorbenzophenon und/oder Bis-(4-Fluorphenyl)phosphinoxyd und/oder Bis-(4-Fluorbenzoyl)benzol oder Dichlordiphenylsulfon und/oder Dichlorbenzophenon eingesetzt werden.

11. Verfahren nach den Anspruch 6, bei dem die Arylenpolymere mit aromatischen Gruppen "Ar" als Seitenkette durch Zugabe der Polymere zu einem Sulfonierungsmittel sulfoniert werden, wobei vorteilhafterweise die Arylenpolymere mit aromatischen Gruppen "Ar" als Seitenkette in einem inerten Lösungsmittel gelöst und mit einem Sulfonierungsmittel sulfoniert werden, welches vorteilhafterweise in einem inerten Lösungsmittel gelöst eingesetzt wird, und weiterhin vorteilhafterweise als Sulfonierungsmittel Schwefelsäure oder Oleum oder Chlorsulfonsäure oder Chlorsulfonsäuretrimethylsilylester oder Acetylsulfat oder ein SO₃-Triethylphosphit-Addukt eingesetzt wird, wobei vorteilhafterweise als Lösungsmittel Chloroform oder Dichlormethan oder Dichlorethan oder Tetrachlorethan eingesetzt wird.

12. Verfahren nach Anspruch 11, bei dem das Sulfonierungsmittel Schwefelsäure ist und die Sulfonierung bei Raumtemperatur und während einer Reaktionszeit von 1 bis 8 Stunden, vorteilhafterweise während einer Zeit von 2 bis 4 Stunden, durchgeführt wird, oder auch vorteilhafterweise als Sulfonierungsmittel Chlorsulfonsäuretrimethylsilylester eingesetzt wird und die Sulfonierungsreaktion bei einer Temperatur von 25°C bis 100°C, vorteilhafterweise bei einer Temperatur von 25°C bis 50°C, durchgeführt wird.

13. Verfahren Anspruch 6, bei dem durch Nachbehandlung instabile Sulfonsäuregruppen abgespalten werden.

14. Verwendung der sulfonierten Polyarylenverbindungen nach mindestens einem der Ansprüche 1 bis 5 und hergestellt nach mindestens einem der Ansprüche 6 bis 13 als Membranmaterial.

15. Verwendung nach Anspruch 14 als Membranmaterial für lonenaustauschermembranen für Brennstoffzellen oder andere elektrochemische Prozesse oder als Nanofiltrationsmembran oder als Ultrafiltrationsmembran oder als Mikrofiltrationsmembran oder als Umkehrosmosemembran.

## Claims

1. Sulphonated polyarylene compounds according to at least one of the general formulae (I)-(IV) 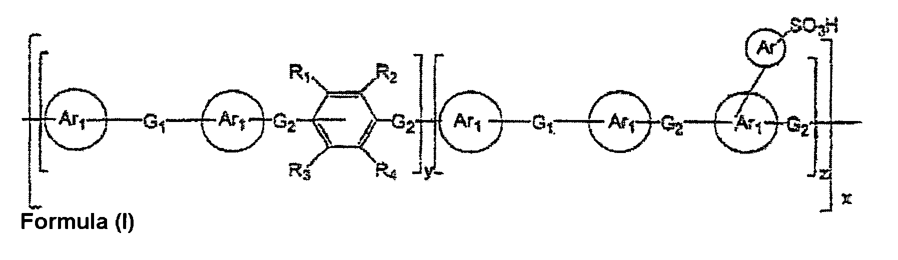 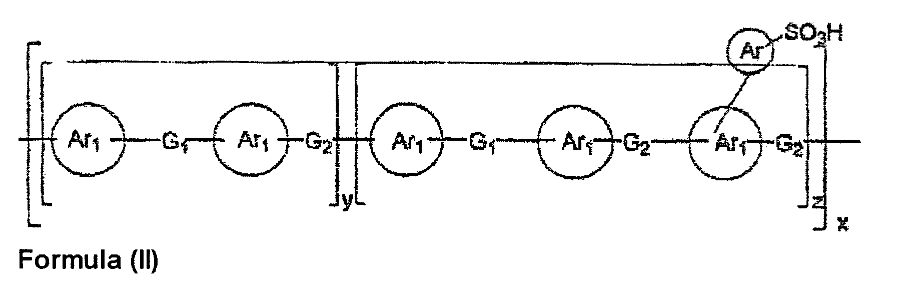 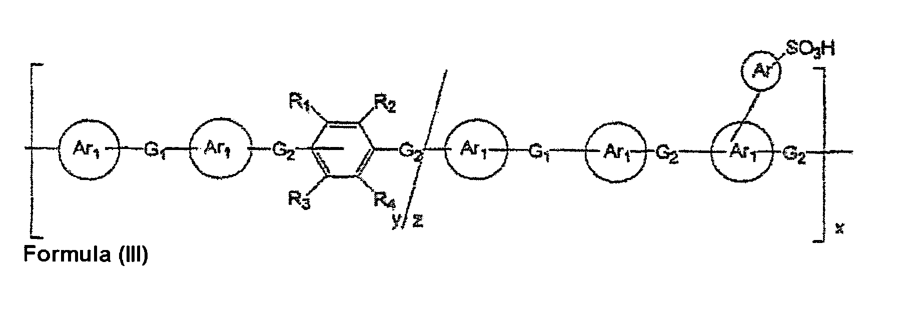 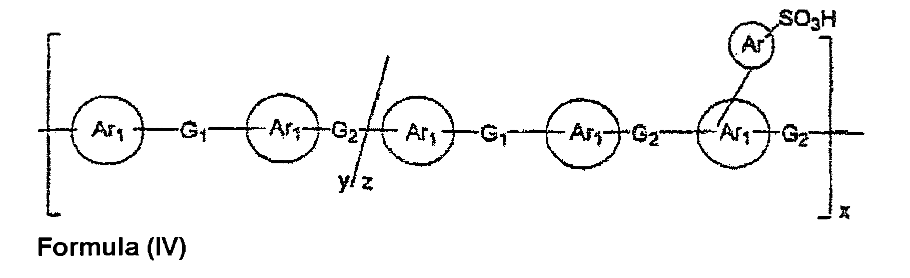 where:
Ar₁ are mono- and/or polycyclic aromatics and
G₁ is a group with electron acceptor properties and
G₂ is an ether and/or sulphide and/or keto and/or sulphone and/or phenylphosphine oxide and/or sulphoxide group and
R₁, R₂, R₃, R₄ are each substituents or R₁ to R₄ are each hydrogen or at least one R₁ to R₄ radical is not hydrogen and is a substituent, and
y ≥ 0 and z ≥ 1 and x ≥ 5 and
Ar = one or more mono- and/or polycyclic aromatics and/or one or more biphenyls,
and sulpho groups are bonded at least to the aromatic "Ar" groups which form the side chains.

2. Sulphonated polyarylene compounds according to Claim 1, in which
Ar₁ is a phenyl unit and/or a naphthyl unit,
and
G₁ is a sulphone group and/or a keto group and/or a phenylphosphine group,
and/or
y ≥ 2, advantageously y ≥ 4,
and/or
z ≥ 2, advantageously z ≥ 4,
and/or
x ≥ 10, advantageously x ≥ 20,
and/or
Ar is at least one phenyl radical and/or at least one naphthyl radical.

3. Sulphonated polyarylene compounds according to Claim 1, in which the sulpho groups are bonded exclusively to the aromatic "Ar" groups.

4. Sulphonated polyarylene compounds according to Claim 1, in which the polyarylene compounds have predominantly a block structure or a random or a purely block structure.

5. Sulphonated polyarylene compounds according to Claim 1, in which the aromatic "Ar" groups are bonded as a side chain directly covalently to a mono- or polycyclic aromatic of the main chain.

6. Process for preparing sulphonated polyarylene compounds according to Claim 1, in which at least monoaryl-substituted 1,4-dihydroxybenzenes/hydroquinones and/or 1,4-dihydroxynaphthalenes as aryl monomers with an aromatic "Ar" group are polymerized together with dihaloaromatics to give arylene compounds and then sulphonic acid groups are bonded at least to the aromatic "Ar" groups.

7. Process according to Claim 6, in which the aryl monomers used are phenylhydroquinone and/or naphthylhydroquinone and/or anthracenylhydroquinone and/or 2,5-diphenylhydroquinone and/or biphenyl-hydroquinone and/or 2,5-bisbiphenylhydroquinone and/or tetraphenylhydroquinone and/or 1,4-dihydroxy-2-phenylnaphthalene and/or 1,4-dihydroxy-2-naphthylnaphthalene.

8. Process according to Claim 6, in which the aryl monomers are polymerized in solution or in the melt to give arylene polymers with aromatic "Ar" groups as a side chain.

9. Process according to Claim 6, in which further aryl monomers without an aromatic "Ar" group as a side chain are incorporated into the polymer chain of the polyarylene compounds, advantageously bisphenols, such as 4,4'-dihydroxybenzophenone and/or 3,4'-dihydroxybenzophenone and/or 2,4'-dihydroxybenzophenone and/or 2,2'-dihydroxybenzophenone and/or 4,4'-dihydroxydiphenyl sulphone and/or 3,4'-dihydroxydiphenyl sulphone and/or 2,4'-dihydroxydiphenyl sulphone and/or 2,2'-dihydroxydiphenyl sulphone and/or 2,2-(bis-4-hydroxyphenyl)hexafluoropropane, or further 1,4-dihydroxybenzenes/hydroquinones and/or 1,4-dihydroxynaphthalenes.

10. Process according to Claim 6, in which the dihaloaromatics used are difluorodiphenyl sulphone and/or difluorobenzophenone and/or bis(4-fluorophenyl)phosphine oxide and/or bis(4-fluorobenzoyl)benzene or dichlorodiphenyl sulphone and/or dichlorobenzophenone.

11. Process according to Claim 6, in which the arylene polymers with aromatic "Ar" groups as a side chain are sulphonated by adding the polymers to a sulphonating agent, advantageously by dissolving the arylene polymers with aromatic "Ar" groups as a side chain in an inert solvent and sulphonating with a sulphonating agent which is advantageously used dissolved in an inert solvent, and additionally advantageously using, as the sulphonating agent, sulphuric acid or oleum or chlorosulphonic acid or trimethylsilyl chlorosulphonate or acetyl sulphate or an SO₃-triethyl phosphite adduct, advantageously using, as the solvent, chloroform or dichloromethane or dichloroethane or tetrachloroethane.

12. Process according to Claim 11, in which the sulphonating agent is sulphuric acid and the sulphonation is performed at room temperature and over a reaction time of 1 to 8 hours, advantageously over a period of 2 to 4 hours, or else trimethylsilyl chlorosulphonate is advantageously used as the sulphonating agent and the sulphonation reaction is performed at a temperature of 25°C to 100°C, advantageously at a temperature of 25°C to 50°C.

13. Process according to Claim 6, in which after treatment eliminates unstable sulpho groups.

14. Use of the sulphonated polyarylene compounds according to at least one of Claims 1 to 5 and prepared according to at least one of Claims 6 to 13 as a membrane material.

15. Use according to Claim 14 as a membrane material for ion exchange membranes for fuel cells and other electrochemical processes or as an nanofiltration membrane or as an ultrafiltration membrane or as an microfiltration membrane or as a reverse osmosis membrane.

## Revendications

1. Composés sulfonés de polyarylène selon au moins l'une quelconque des formules générales (I)-(IV) 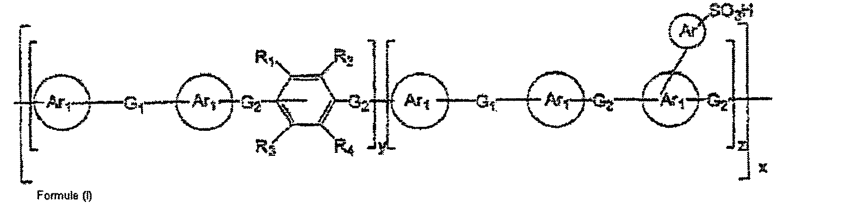 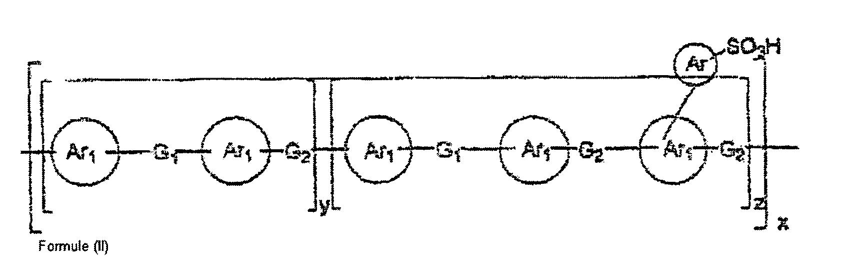 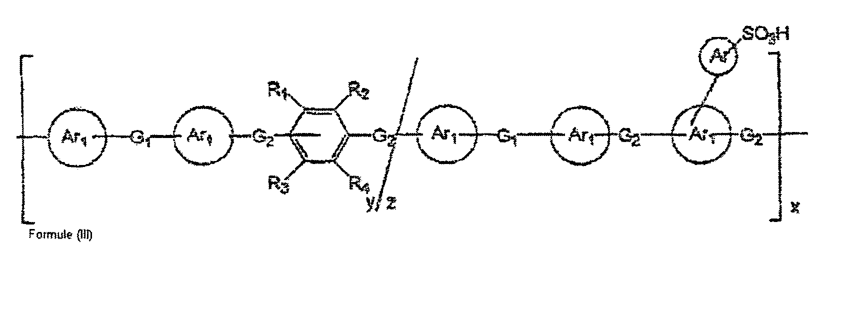 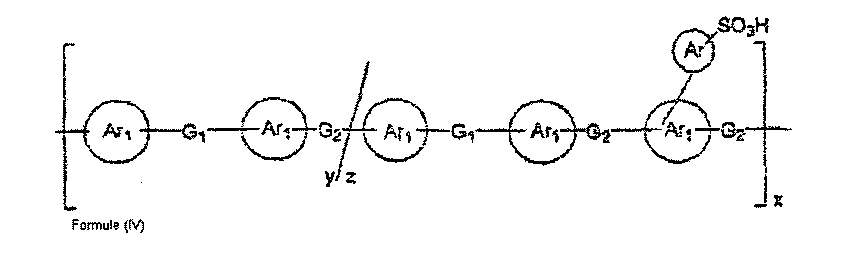 et où
les groupes Ar₁ représentent des aromatiques à un et/ou plusieurs noyaux et
G₁ représente un groupe avec des propriétés d'accepteur d'électrons et
G₂ représente un éther et/ou groupe sulfure et/ou céto et/ou sulfone et/ou phénylphosphinoxyde et/ou sulfoxyde et
R₁, R₂, R₃, R₄ sont des substituants ou R₁ à R₄ représentent hydrogène ou au moins un radical R₁ à R₄ est différent d'hydrogène et celui-ci est un substituant et
y ≥ 0 et z ≥ 1 et x ≥ 5 et
les groupes Ar représentent un ou plusieurs aromatiques à un et/ou plusieurs noyaux et/ou un ou plusieurs biphényles,
et des groupes acide sulfonique sont au moins liés aux groupes aromatiques "Ar", qui forment les chaînes latérales.

2. Composés sulfonés de polyarylène selon la revendication 1, où
les groupes Ar₁ représentent une unité phényle et/ou une unité naphtyle,
et
G₁ représente un groupe sulfone et/ou un groupe céto et/ou un groupe phénylphosphine,
et/ou
y ≥ 2, avantageusement y ≥ 4,
et/ou
z ≥ 2, avantageusement z ≥ 4,
et/ou
x ≥ 10, avantageusement x ≥ 20,
et/ou
Ar représente au moins un radical phényle et/ou au
moins un radical naphtyle.

3. Composés sulfonés de polyarylène selon la revendication 1, où les groupes acide sulfonique sont liés exclusivement aux groupes aromatiques "Ar".

4. Composés sulfonés de polyarylène selon la revendication 1, où les composés de polyarylène présentent principalement une structure à blocs ou une structure à blocs statistique ou pure.

5. Composés sulfonés de polyarylène selon la revendication 1, où les groupes aromatiques "Ar" sont liés, en tant que chaîne latérale, directement, par covalence, à un aromatique à un ou plusieurs noyaux de la chaîne principale.

6. Procédé pour la préparation de composés sulfonés de polyarylène selon la revendication 1, dans lequel des 1,4-dihydroxybenzènes/hydroquinones et/ou des 1,4-dihydroxynaphtalènes au moins monosubstitués par aryle sont polymérisés en tant que monomères à fonctionnalité aryle avec un groupe aromatique "Ar" ensemble avec des aromatiques dihalogénés en composés d'arylène, puis des groupes acide sulfonique sont liés au moins aux groupes aromatiques "Ar".

7. Procédé selon la revendication 6, dans lequel on utilise comme monomères à fonctionnalité aryle de la phénylhydroquinone et/ou de la naphtylhydroquinone et/ou de l'anthracénylhydroquinone et/ou de la 2,5-diphénylhydroquinone et/ou de la biphénylylhydroquinone et/ou de la 2,5-bis-biphénylylhydroquinone et/ou de la tétraphénylhydroquinone et/ou du 1,4-dihydroxy-2-phénylnaphtalène et/ou du 1,4-dihydroxy-2-naphtylnaphtalène.

8. Procédé selon la revendication 6, dans lequel les monomères à fonctionnalité aryle sont polymérisés en solution ou en masse fondue en polymères d'arylène avec des groupes aromatiques "Ar" comme chaîne latérale.

9. Procédé selon la revendication 6, dans lequel d'autres monomères à fonctionnalité aryle sans groupe aromatique "Ar" comme chaîne latérale, avantageusement des biphénols, tels que la 4,4'-dihydroxybenzophénone et/ou la 3,4'-dihydroxybenzophénone et/ou la 2,4-dihydroxybenzophénone et/ou la 2,2'-dihydroxybenzophénone et/ou la 4,4'-dihydroxydiphénylsulfone et/ou la 3,4'-dihydroxydiphénylsulfone et/ou la 2,4'-dihydroxydiphénylsulfone et/ou la 2,2'-dihydroxydiphénylsulfone et/ou le 2,2-(bis-4-hydroxyphényl)hexafluoropropane, ou d'autres 1,4-dihydroxybenzènes/hydroquinones et/ou 1,4-dihydroxynaphtalènes, sont liés dans la chaîne polymère des composés de polyarylène.

10. Procédé selon la revendication 6, dans lequel on utilise comme aromatiques dihalogénés de la difluorodiphénylsulfone et/ou de la difluorobenzophénone et/ou du bis-(4-fluorophényl)phosphinoxyde et/ou du bis-(4-fluorobenzoyl)benzène ou de la dichlorodiphénylsulfone et/ou de la dichlorobenzophénone.

11. Procédé selon la revendication 6, dans lequel les polymères d'arylène avec des groupes aromatiques "Ar" comme chaîne latérale sont sulfonés par addition des polymères à un agent de sulfonation, où les polymères d'arylène avec des groupes aromatiques "Ar" comme chaîne latérale sont avantageusement dissous dans un solvant inerte et sulfonés avec un agent de sulfonation, qui est avantageusement utilisé sous forme dissoute dans un solvant inerte, et on utilise en outre avantageusement comme agent de sulfonation de l'acide sulfurique ou de l'oléum ou de l'acide chlorosulfonique ou de l'ester triméthylsilylique de l'acide chlorosulfonique ou de l'acétylsulfate ou un produit d'addition de SO₃-triéthylphosphite, en utilisant avantageusement comme solvant du chloroforme ou du dichlorométhane ou du dichloroéthane ou du tétrachloroéthane.

12. Procédé selon la revendication 11, dans lequel l'agent de sulfonation est l'acide sulfurique et la sulfonation est réalisée à température ambiante et pendant un temps de réaction de 1 à 8 heures, avantageusement pendant un temps de 2 à 4 heures, ou on utilise également avantageusement comme agent de sulfonation de l'ester triméthylsilylique de l'acide chlorosulfonique et la réaction de sulfonation est réalisée à une température de 25°C à 100°C, avantageusement à une température de 25°C à 50°C.

13. Procédé selon la revendication 6, dans lequel des groupes acide sulfonique instables sont dissociés par post-traitement.

14. Utilisation des composés sulfonés de polyarylène selon au moins l'une quelconque des revendications 1 à 5 et préparés selon au moins l'une quelconque des revendications 6 à 13 comme matériau pour membrane.

15. Utilisation selon la revendication 14 comme matériau pour membrane pour des membranes échangeuses d'ions pour des piles à combustible ou d'autres processus électrochimiques ou comme membrane de nanofiltration ou comme membrane d'ultrafiltration ou comme membrane de microfiltration ou comme membrane pour osmose inverse.
